(19) Europäisches Patentamt
European Patent Office
Office européen des brevets

(11) **EP 3 962 860 B1**

(12) **EUROPÄISCHE PATENTSCHRIFT**

(45) Veröffentlichungstag und Bekanntmachung des Hinweises auf die Patenterteilung:
**03.07.2024 Patentblatt 2024/27**

(21) Anmeldenummer: **19723037.8**

(22) Anmeldetag: **30.04.2019**

(51) Internationale Patentklassifikation (IPC):
**C01B 33/037** $^{(2006.01)}$ **C22B 9/10** $^{(2006.01)}$

(52) Gemeinsame Patentklassifikation (CPC):
**C01B 33/037; C01B 33/00;** C01P 2004/60;
C01P 2006/14

(86) Internationale Anmeldenummer:
**PCT/EP2019/061048**

(87) Internationale Veröffentlichungsnummer:
**WO 2020/221440 (05.11.2020 Gazette 2020/45)**

(54) **VERFAHREN ZUR RAFFINATION VON ROHSILICIUM-SCHMELZEN MITTELS EINES PARTIKULÄREN MEDIATORS**

METHOD FOR REFINING CRUDE SILICON MELTS USING A PARTICULATE MEDIATOR

PROCÉDÉ D'AFFINAGE DE SILICIUM BRUT FONDU, AU MOYEN D'UN MÉDIATEUR PARTICULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.03.2022 Patentblatt 2022/10**

(73) Patentinhaber: **Wacker Chemie AG**
**81737 München (DE)**

(72) Erfinder:
• **RIMBÖCK, Karl-Heinz**
**84431 Heldenstein (DE)**
• **MAUTNER, Konrad**
**84489 Burghausen (DE)**

(74) Vertreter: **Renner, Thomas et al**
**Wacker-Chemie AG**
**Intellectual Property**
**Hanns-Seidel-Platz 4**
**81737 München (DE)**

(56) Entgegenhaltungen:
**EP-B1- 2 321 220      WO-A1-2010/098676**
**DE-T2- 69 508 498**

• **DATABASE WPI Week 201401 Thomson Scientific, London, GB; AN 2013-V98661 XP002796332, & CN 103 318 894 A (UNIV DALIAN TECHNOLOGY) 25. September 2013 (2013-09-25)**

EP 3 962 860 B1

**Beschreibung**

Die Erfindung betrifft ein Verfahren zur oxidativen Raffination von Rohsilicium-Schmelze bei der Herstellung von technischem Silicium, bei dem der Rohsilicium-Schmelze ein metallisches Silicium enthaltender partikulärer Mediator zugesetzt wird.

Silicium findet in technischer Qualität (technisches Silicium) heute v.a. Anwendung in silicothermischen Prozessen, in der Metallgewinnung, als Desoxidationsmittel bei der Stahlherstellung, und dient als Legierungsbestandteil von Gusslegierungen des Aluminiums, Kupfers, Titans und Eisens sowie als Ausgangsmaterial für chemische Verbindungen.

Industriell wird Silicium von technischer Qualität durch carbothermische Reduktion von Quarz ($SiO_2$; gegebenenfalls weitere Zusätze wie beispielsweise Fe-haltige Abfallstoffe [Ferrosilicium] oder Calciumcarbid [Calciumsilicium]) bei hohen Temperaturen (um 2000 °C) und Atmosphärendruck im elektrischen Ofen (Lichtbogenreduktionsofen) gemäß Nettoreaktionsgleichung (1) hergestellt. Der Prozess wird im Standardwerk "Production of High Silicon Alloys" (A. Schei, J.K. Tuset, H. Tveit, Production of High Silicon Alloys, 1998, Tapir forlag, Trondheim) ausführlich beschrieben.

$$SiO_2 + 2\,C \rightarrow Si\,(1) + 2\,CO\,(g) \qquad (1)$$

Während des Betriebs liegen Edukte, Intermediate und Produkte in verschiedenen Aggregatszuständen vor: fest (C, SiC, $SiO_2$, Si), flüssig (Si, $SiO_2$) sowie gasförmig (vorwiegend CO, SiO). Als Kohlenstoffquelle wird üblicherweise eine Reduktionsmischung aus Koks, Petrolkoks, Steinkohle, Holzkohle und Holzteilchen verwendet. Im Ofen herrscht eine stark reduzierende Atmosphäre, die sich insbesondere aus SiO und CO zusammensetzt. $SiO_2$ und C bewegen sich im laufenden Betrieb nach unten, während SiO und CO nach oben strömen. Hierbei werden intermediäre Spezies gemäß folgender Reaktionsgleichungen (2)-(7) gebildet:

$$SiO_2 + C \rightarrow SiO + CO \qquad (2)$$

$$SiO + 2\,C \rightarrow SiC + CO \qquad (3)$$

$$SiO_2 + 2\,SiC \rightarrow 3\,Si + 2\,CO \qquad (4)$$

$$2\,SiO_2 + SiC \rightarrow 3\,SiO + CO \qquad (5)$$

$$SiO_2 + CO \rightarrow SiO + CO_2 \qquad (6)$$

$$2\,CO_2 + SiC \rightarrow SiO + 3\,CO \qquad (7)$$

Silicium wird hauptsächlich durch die in Reaktion (8) gezeigte Reaktion gebildet.

$$SiO + SiC \rightarrow 2\,Si + CO \qquad (8)$$

Derartige Hochtemperatur-Prozesse machen eine möglichst kontinuierliche Fahrweise notwendig. Sowohl die Rohstoffe als auch das flüssige Rohsilicium werden in Intervallen zu- bzw. abgeführt. Letzteres erfolgt üblicherweise durch Abstechen des Ofens und anschließendem Überführen des flüssigen Rohsiliciums (mit einer Temperatur von ca. 1600 bis 1900 °C) in ein Behandlungsgefäß.

EP2321220B1 beschreibt ein Verfahren zum Entfernen von nichtmetallischen Verunreinigungen aus metallurgischem Silicium mit den folgenden Schritten: Vermischen von festem halogenidhaltigem Silicium mit dem zu reinigenden metallurgischen Silicium; Schmelzen der Mischung und dadurch Aussublimieren der Verunreinigungen und Entfernen derselben aus der Schmelze in der Form von Nichtmetallhalogeniden.

WO2010098676A1 betrifft ein Verfahren zur Herstellung von Silizium in Solarqualität, das die Kristallisation großer hochreiner Siliziumkristalle in einer hypereutektischen binären oder ternären Legierung, die Silizium enthält, oder einer raffinierten Siliziumschmelze umfasst, wobei der Schmelze kleine Siliziumkristalle zugesetzt werden und die entstehenden großen Siliziumkristalle werden von der Schmelze abgetrennt. Die Trennung kann durch Zentrifugation oder Filtration erfolgen.

CN103318894A ist gerichtet auf ein Verfahren zur Entfernung von Bor in polykristallinem Silizium. Das Verfahren umfasst die folgenden Schritte: Zugabe eines Metalls/von Metallen zu einem zu reinigenden Siliziummaterial, um ein gemischtes Material herzustellen; Erhitzen des gemischten Materials in einen geschmolzenen Zustand, um eine modifizierte Siliziumlösung zu bilden, und Hinzufügen eines $SiO_2$-CaO-X-Schlackemittels zu der modifizierten Siliziumlösung, um Verschlackung, Schmelzen und Reinigung durchzuführen; Abladen der abgetrennten Schlacke und der Siliziumlösung nach dem Schmelzen und Reinigen, Abkühlen der Siliziumlösung und anschließendes Gewinnen des polykristallinen Siliziums mit dem geringeren Borgehalt, wobei das Metall/die Metalle eines oder mehrere von Ti, Sn, Al, Fe, Cu und Mn ist/sind; und X im $SiO_2$-CaO-X-Schlackenmittel eines von $Na_2SiO_3$, $Na_2CO_3$, $Al_2O_3$, $Li_2O$, BaO, $TiO_2$ und $CaF_2$ darstellt.

Neben den wirtschaftlichen Aspekten eines industriellen Prozesses (beispielsweise Produktivität, Herstellkosten) ist auch die Qualität des hergestellten Produkts von entscheidender Bedeutung. Bei Einsatz von metallurgischem Silicium in der Herstellung von chemischen Verbindungen, beispielsweise Chlorsilanen, werden im Silicium enthaltene Verunreinigungen

(beispielsweise Bor in Form von flüchtigen Chloriden) teilweise - trotz zwischengeschalteter Reinigungsstufen - bis hin zu den jeweiligen Endprodukten (bspw. polykristallines Silicium, Silicone) über mehrere Prozessschritte hinweg verschleppt. Je nach Anwendungsgebiet müssen diese Endprodukte jedoch höchsten Qualitätsanforderungen genügen (Halbleiter-/ Pharma-/Nahrungsmittel-/Kosmetik-Industrien). Für die Herstellung selbiger Produkte im industriellen Maßstab ist daher ein qualitativ hochwertiger Ausgangsstoff - metallurgisches Silicium - wichtig.

Die bei der carbothermischen Reduktion von $SiO_2$ üblicherweise verwendeten Rohstoffe sowie Elektroden enthalten verschiedene Verunreinigungen. Das flüssige Rohsilicium wird üblicherweise in den oben genannten Behandlungsgefäßen oxidativ raffiniert, da an dieser Stelle noch bis zu 5 Masse-% Verunreinigungen im Rohprodukt enthalten sind. Die Raffination von Rohsilicium erfolgt branchenüblich durch Behandlung mit einer reaktiven Gasmischung (beispielsweise $Cl_2$, $O_2$, $SiCl_4$, feuchter $H_2$ und $CO_2$ oder Kombinationen daraus; üblicherweise mit einem Inertgas verdünnt) und dem Zusatz von Schlacke-bildenden Additiven (beispielsweise Quarzsand, Kalkstein, Kalkerde, Dolomit, Flussspat, etc.), wobei sich für die Nebenelemente ein Verteilungsgleichgewicht zwischen Silicium- und Schlackephase einstellt. Bei der Raffination fällt die Temperatur der Raffinationsmischung von ca. 1900 °C auf bis zu ca. 1500 °C ab. Um zu vermeiden, dass die Mischung erstarrt, wird der Mischung - wie oben beschrieben - ein unter den Betriebsbedingungen gasförmiges Reagenz zugeführt. So bewirkt bspw. das Zuleiten von Sauerstoff die Oxidation von Silicium zu Siliciumdioxid, wobei die freiwerdende Energie die im Behandlungsgefäß befindliche Mischung flüssig hält. Der Begriff "oxidative Raffination" umfasst die Kombination aus Zuleiten einer Sauerstoff-enthaltenden Gasmischung und dem Zusatz eines oder mehrerer Schlacke-Bildner/-s.

Nach beendeter oxidativer Raffination werden Silicium- und Schlackephase der üblicherweise noch flüssigen Mischung getrennt.

Die größten Nachteile bei konventionellen oxidativen Raffinationsmethoden sind Verlust von Silicium über die Schlacke in Form von Siliciumdioxid oder in der Schlacke eingeschlossenes metallisches Silicium sowie ineffiziente Abtrennung von unerwünschten Nebenelementen. Hierdurch vermindert sich sowohl die Wirtschaftlichkeit der Silicium-Herstellung als auch die Qualität des entsprechenden Produkts.

Die Aufgabe der vorliegenden Erfindung bestand darin, die Wirtschaftlichkeit der Herstellung von technischem Silicium sowie die Effizienz der Abtrennung von unerwünschten Nebenelementen und damit die Qualität des Produkts zu verbessern.

Gegenstand der Erfindung ist ein Verfahren zur oxidativen Raffination von Rohsilicium-Schmelze bei der Herstellung von technischem Silicium, bei dem der Rohsilicium-Schmelze während der Raffination ein partikulärer Mediator zugesetzt wird, welcher einen Mindestgehalt an metallischem Silicium von 8 Masse-% sowie zumindest eines oder mehrere der Elemente H, C, O, F, Cl, Ca, Fe und Al enthält, wobei der Mediator durch eine Kennzahl K beschrieben ist, die einen Wert von 0,03 bis 6 mm$^{-1}$ aufweist und wie folgt berechnet wird:

$$K = \frac{6 \cdot (1 - \varepsilon_{m,M})}{d_{50,M}}, \qquad \text{(Gleichung 1)},$$

wobei

$d_{50,M}$  Partikelgröße (Durchmesser) bei 50% des Massendurchgangs der Sieblinie des Mediators [mm]
$\varepsilon_{m,M}$  mittlere, effektive Porosität des partikulären Mediators.

Überraschenderweise hat sich gezeigt, dass sich durch Zusatz des partikulären Mediators mit einer Kennzahl K von 0,03 bis 6 mm$^{-1}$ während der Raffination von Rohsilicium-Schmelzen die Produktivität der Herstellung von technischem Silicium sowie die Qualität des technischen Siliciums erhöhen läßt. Ursächlich hierfür sind zum einen, die Verminderung von Silicium-Verlusten durch eine effizientere Phasentrennung zwischen Silicium und Schlacke und zum anderen, die effizientere Abtrennung von unerwünschten Begleitelementen. Ersteres führt somit zu höheren Ausbeuten an technischem Silicium und damit zu einem niedrigeren spezifischen Energieverbrauch zur Herstellung von technischem Silicium. Ein weiterer Vorteil des erfindungsgemäßen Verfahrens besteht in der Möglichkeit, Nebenan- und Abfälle im Sinne der Kreislaufwirtschaft zu verwerten bzw. zu recyceln.

Die Rohsilicium-Schmelzen werden vorzugsweise durch carbothermische Reduktion von Quarz mit Kohle im elektrischen Ofen hergestellt.

Die oxidative Raffination der Rohsilicium-Schmelze erfolgt vorzugsweise durch Behandlung mit einer reaktiven Gasmischung, die vorzugsweise Verbindungen enthält, die ausgewählt werden aus $Cl_2$, $O_2$, $SiCl_4$, feuchtes $H_2$ und $CO_2$ und Kombinationen daraus. Vorzugsweise wird die reaktive Gasmischung mit einem Inertgas verdünnt, das ausgewählt wird aus Stickstoff und Argon und Kombinationen daraus.

Technisches Silicium weist einen Si-Gehalt von <99,9 Masse-% bezogen auf das Gesamtgewicht des technischen Siliciums auf. Die Begleitelemente werden meistens ausgewählt aus Fe, Ca, Al, Ti, Cu, Mn, Cr, V, Ni, Mg, Co, W, Mo, As, Sb, Bi, S, Se, Te, Zr, Ge, Sn, Pb, Zn, Cd, Sr, Ba, Y, B, C, P und O. Der Si-Gehalt wird wie folgt bestimmt: 100 Masse-% abzüglich der Gewichtsanteile der Begleitelemente.

Bedeutende Sorten von technischem Silicium die im Verfahren raffiniert werden sind Calciumsilicium (Calciumdisilicid, $CaSi_2$) mit 55-65 Masse-% Si und 35-45 Masse-% Ca, Ferrosilicium mit 45-90 Masse-% Si und 10-55 Masse-% Fe sowie metallurgisches Silicium mit 98-99,5 Masse-% Si.

Das hergestellte technische Silicium weist vorzugsweise ein Si-Gehalt von mindestens 90 Masse-%, besonders bevorzugt mindestens 95 Masse-%, insbesondere mindestens 97 Masse-% auf.

Der Mediator wird bei der oxidativen Raffination von Rohsilicium-Schmelze der Rohsilicium-Schmelze zusätzlich zu oder statt den herkömmlichen Schlacke-bildenden Additiven zugesetzt. Schlacke-bildenden Additive werden vorzugsweise ausgewählt aus Quarzsand, Kalkstein, Kalkerde, Dolomit und Flussspat.

In einer bevorzugten Ausführungsform beträgt der Gewichtsanteil von reaktivem Kohlenstoff am Mediator, bezogen auf die Gesamtmasse des Mediators, höchstens 0,1, bevorzugt höchstens 0,08, besonders bevorzugt höchstens 0,06, insbesondere höchstens 0,04. Unter "reaktivem Kohlenstoff" soll in der vorliegenden Erfindung der Kohlenstoffanteil des Mediators verstanden werden, der bis zu einer Temperatur von 1100 °C unter thermo-oxidativer Degradation mit $O_2$ reagiert. Bei reaktivem Kohlenstoff handelt es sich üblicherweise um Kohlenstoff in organischen Verbindungen (z.B. Öle, Fette, Polymere) sowie Kohlenstoff in anorganischen Verbindungen (z.B. Carbonate, Carbide) und elementaren Kohlenstoff in seinen allotropen Formen.

Gemäß einer bevorzugten Ausführungsform weist der Mediator einen Wasser-Gehalt von maximal 5 Masse-%, bevorzugt von maximal 3 Masse-%, besonders bevorzugt von maximal 1 Masse-%, insbesondere von maximal 1000 ppmw auf. Gemäß einer bevorzugten Ausführungsform weist der Mediator einen Sauerstoffgewichtsanteil von maximal 0,4, bevorzugt maximal 0,3, besonders bevorzugt maximal 0,2, insbesondere maximal 0,15, jedoch mindestens 0,01 auf.

Der Mindestgehalt im Mediator an metallischem Silicium beträgt vorzugsweise 10 Masse-%, besonders bevorzugt mindestens 20 Masse-%, ganz besonders bevorzugt mindestens 30 Masse-%, insbesondere mindestens 40% Masse-%.

Vorzugsweise enthält der Mediator Siliciumreste, die vorzugsweise ausgewählt werden aus Nebenprodukten oder Abfällen, der Silicium-herstellenden oder -verarbeitenden Industrien, z.B.

- die bei der Herstellung oder bei der mechanischen Bearbeitung von Silicium, wie poly-, multi- oder einkristallinem Silicium anfallen, wobei es sich bei der mechanischen Bearbeitung insbesondere um Brechen, Mahlen und/oder Sägen handelt;
- die bei der Herstellung von granuliertem Siliciummetall beispielsweise in Wirbelschicht-, Zentrifugal-, Gaszerstäubungs-, Wassergranulat-Verfahren anfallen;
  die bei der Herstellung von Silicium technischer Qualität mittels carbothermischer Reduktion von $SiO_2$ anfallen;
- die bei der mechanischen Bearbeitung und gegebenenfalls einem oder mehreren Klassierungsverfahren von technischem Silicium anfallen. Bei der mechanischen Bearbeitung kann es sich insbesondere um Brechen und/oder Mahlen handeln. Typische Klassierungsverfahren sind beispielsweise Sieben und/oder Sichten;

die bei der Herstellung von Silanen anfallen. Beispielsweise kann es sich hierbei um neutralisierte Kontaktmasse aus Chlorsilanreaktoren handeln, vor und/oder nach einer Rückgewinnung von Cu; insbesondere der Prozesse Müller-Rochow Direktsynthese, Hydrochlorierung oder Niedertemperaturkonvertierung von Silanen.

Eine Aufreinigung dieser Siliciumreste vor dem erfindungsgemäßen Einsatz in den Mediatoren ist üblicherweise nicht erforderlich.

Vorzugsweise enthält der Mediator mindestens 10 Masse-%, Siliciumreste, besonders bevorzugt mindestens 20 Masse-%, ganz besonders bevorzugt mindestens 30 Masse-%, insbesondere mindestens 50 Masse-% Siliciumreste.

Bevorzugt wird der Mediator einem Zerkleinerungs- (z.B. Mahlen, Brechen), Klassierungs- (z.B. Sieben, Sichten) und/oder Agglomerisationsverfahren (z.B. Pelletieren, Brikettieren, Sintern) unterzogen, um den gewünschten Wert für Kennzahl K zu erhalten.

Um gezielt bestimmte Werte für Kennzahl K einzustellen wird der Mediator vorzugsweise agglomeriert (beispielsweise durch Pelletieren, Brikettieren, Sintern) und getrocknet.

Die neben dem metallischen Silicium im Mediator vorhandenen Elemente können als Verbindungen oder Legierungen dieser Elemente vorliegen.

Neben den bereits beschriebenen Elementen kann der partikuläre Mediator folgende Begleitelemente enthalten: Si, Li, Na, K, Mg, Ca, Ba, Ti, Zr, V, Cr, Mo, W, Mn, Fe, Co, Ni, Cu, Zn, B, Sn, Pb, N, P, As, Sb, Bi, S.

Vorzugsweise beträgt das Masseverhältnis von Masse (Mediator) zu Masse (Rohsilicium-Schmelze) beim Zusetzen des Mediators 0,01 bis 0,5, besonders bevorzugt 0,02 bis 0,25, ganz besonders bevorzugt 0,03 bis 0,15, insbesondere 0,04 bis 0,1.

Vorzugsweise beträgt $d_{50,M}$ 1 bis 100 mm, besonders bevorzugt 10 bis 75 mm, ganz besonders bevorzugt 15 bis 50 mm, insbesondere 20 bis 30 mm.

Vorzugsweise weist der partikuläre Mediator eine mittlere effektive Porosität von 0 bis 0,6, besonders bevorzugt von 0,05 bis 0,4, ganz besonders bevorzugt von 0,1 bis 0,35, insbesondere von 0,15 bis 0,3 auf.

Nach beendeter oxidativer Raffination werden die Phasen technisches Silicium und Schlacke der üblicherweise noch flüssigen Mischung getrennt und das flüssige technische Silicium auf einer gekühlten Oberfläche oder in einem gekühlten Medium erstarrt. Dies kann beispielsweise durch Dekantieren der Mischung, Gießen der aufschwimmenden technischen Siliciumphase in eine Mulde und Erstarren des technischen Siliciums in selbiger erfolgen.

Es kann ferner bevorzugt sein, das flüssige technische Silicium gezielt mit Elementen zu dotieren bzw. zu legieren. Dies kann beispielsweise angezeigt sein, wenn das zu produzierende technische Silicium für den Einsatz in der Synthese von Chlorsilanen vorgesehen ist. Hierbei handelt es sich um eines oder mehrere der Elemente aus der Gruppe mit Al, Cu, Sn, Zn, O und P oder eine Verbindung oder mehrere Verbindungen dieser Elemente oder Mischungen dieser Elemente und Verbindungen.

Die Bestimmung des Silicium-Gehalts des Mediators kann beispielsweise über Röntgenfluoreszenzanalyse (RFA), ICPbasierte Analysemethoden (ICP-MS, ICP-OES) oder Atomabsorptionsspektrometrie (AAS).

Für Mischungen partikulärer Stoffe, die Korndurchmesser von überwiegend > 0,1 mm aufweisen, werden üblicherweise Siebanalysen durchgeführt, um die Partikelmischung zu charakterisieren. Die Bestimmung der Korngrößenverteilung mittels Siebanalyse erfolgt nach DIN 66165. Eine Berechnung von mittleren Partikelgrößen/-durchmessern aus Partikelgrößenverteilungen kann nach DIN ISO 9276-2 erfolgen.

Die Gesamtporosität eines Stoffes setzt sich zusammen aus der Summe der Hohlräume, die untereinander und mit der Umgebung in Verbindung stehen (offene Porosität; hier, in der vorliegenden Erfindung: effektive Porosität) und den nicht miteinander verbundenen Hohlräumen (geschlossene Porosität). Die Porositätsmessungen werden nach dem Archimedischen Prinzip gemäß ASTM C373-88 durchgeführt. Ferner kann die Porosität eines Materials durch Berechnung aus der absoluten und der apparenten Dichte erfolgen. Die absolute und die apparente Dichte können mittels Gewichtsmessung und Volumenmessung mittels Gaspyknometern bestimmt werden. Die Bestimmung der Dichte fester Stoffe wird in DIN 66137-2:2019-03 beschrieben.

Die Bestimmung des Anteils von "reaktivem Kohlenstoff" und des Wassergehalts im Mediator erfolgt vorzugsweise unter Verwendung eines Mehrphasen-Analysators wie bspw. LECO RC-612 (vgl. auch DIN 19539).

**Beispiele**

Die nachfolgend beschriebenen Versuche wurden an Umgebungsluft und bei Raumtemperatur (20°C) durchgeführt.

Flüssiges Rohsilicium aus einem kontinuierlichen Herstellprozess für metallurgisches Silicium wurde in einem Behandlungsgefäß aufgefangen, anschließend unter Zusatz verschiedener Mediatoren über einen Zeitraum von 100 min oxidativ raffiniert (Raffinationsgas: Sauerstoff/Luft-Gemisch [Sauerstoff-Gehalt bei 30 Vol-% bezogen auf Gesamtvolumen der Gasmischung]; Volumenstrom der Mischung: 16 Nm³/h je 1 t flüssiges Rohsilicium), die Silicium-Phase in eine Mulde dekantiert und schließlich erstarrt. Nach Abkühlen auf Raumtemperatur und mechanischem Entfernen des Siliciums aus der Mulde wurden spezifischer Energieverbrauch pro Tonne Silicium-Produkt und Reinheit des Silicium-Produkts bestimmt. Die Versuche wurden im Vergleich zu herkömmlichen Prozessen ausgewertet: üblicherweise liegt der spezifische Energieverbrauch pro Tonne Silicium-Produkt bei 13,0 MWh/t, wobei die Reinheit des Silicium-Produkts bei ca. 98,5% liegt. Tabelle 1 und 3 geben einen Überblick über die eingesetzten Mediatoren - die Ergebnisse der Versuche sind in Tabellen 2 und 4 zusammengefasst.

Tabelle 1

| Mediator | K [mm⁻¹] | Si [Masse-%] | Begleitelemente | Gehalt [Masse-%] | | |
|---|---|---|---|---|---|---|
| | | | | Wasser | O | C |
| A | 0,09 | 10 | Fe, Ca, Al, F, Cl | 5 | 40 | 10 |
| B | 0,09 | 10 | Fe, Ca, Al, F, Cl | 0,05 | 0,5 | 5 |

(fortgesetzt)

| Mediator | K [mm⁻¹] | Si [Masse-%] | Begleitelemente | Gehalt [Masse-%] | | |
|----------|----------|--------------|-----------------|------------------|-----|-----|
| | | | | Wasser | O | C |
| C | 0,09 | 10 | Fe, Ca, Al, F | 5 | 15 | 2 |
| D | 0,09 | 10 | Fe, Ca, Al | 5 | 15 | 2 |
| E | 0,09 | 10 | Fe, Ca, Al | 5 | 15 | 2 |
| F | 0,09 | 20 | Fe, Ca, Al | 1 | 15 | 2 |
| G | 0,09 | 40 | Fe, Ca, Al | 0,5 | 10 | 2 |
| H | 0,09 | 50 | Fe, Ca, Al | 1 | 15 | 2 |
| I | 0,09 | 60 | Fe, Ca, Al | 1 | 15 | 2 |
| J | 0,09 | 80 | Fe, Ca, Al | 1 | 15 | 2 |

Tabelle 2

| Versuch | Mediator | Massenverhältnis m(Mediator)/ m (Rohsilicium) | Spezifischer Energieverbrauch [MWh/t] | Reinheit [Masse-% Si] |
|---------|----------|-----------------------------------------------|----------------------------------------|------------------------|
| 1 | A | 0,1 | 12,92 | 98,8 |
| 2 | B | 0,1 | 12,91 | 98,8 |
| 3 | C | 0,1 | 12,91 | 98, 7 |
| 4 | D | 0,1 | 12,9 | 98,8 |
| 5 | E | 0,1 | 12,9 | 98,8 |
| 6 | F | 0,1 | 12,85 | 98,9 |
| 7 | G | 0,1 | 12,87 | 98,8 |
| 8 | H | 0,1 | 12,8 | 98,9 |
| 9 | I | 0,1 | 12,78 | 98,9 |
| 10 | J | 0,1 | 12,75 | 98,9 |

Tabelle 3

| Mediator | K [mm⁻¹] | Si [Masse-%] | Begleitelemente | Gehalt [Masse-%] | | |
|----------|----------|--------------|-----------------|------------------|-----|-----|
| | | | | Wasser | O | C |
| K | 0,03 | 50 | Fe, Ca, Al | 1 | 13 | 2 |
| L | 0,04 | 50 | Fe, Ca, Al | 1 | 13 | 2 |
| M | 0, 06 | 50 | Fe, Ca, Al | 1 | 13 | 2 |
| N | 0,09 | 50 | Fe, Ca, Al | 1 | 13 | 2 |
| O | 0,11 | 50 | Fe, Ca, Al | 1 | 13 | 2 |
| P | 0,18 | 50 | Fe, Ca, Al | 1 | 13 | 2 |
| Q | 0,42 | 50 | Fe, Ca, Al | 1 | 13 | 2 |
| R | 0,96 | 50 | Fe, Ca, Al | 1 | 13 | 2 |
| S | 1,14 | 50 | Fe, Ca, Al | 1 | 13 | 2 |
| T | 3,6 | 50 | Fe, Ca, Al | 1 | 13 | 2 |

(fortgesetzt)

| Mediator | K [mm⁻¹] | Si [Masse-%] | Begleitelemente | Gehalt [Masse-%] | | |
|---|---|---|---|---|---|---|
| | | | | Wasser | O | C |
| U | 6 | 50 | Fe, Ca, Al | 1 | 13 | 2 |

Tabelle 4

| Versuch | Mediator | Massenverhältnis m(Mediator)/ m (Rohsilicium) | Spezifischer Energieverbrauch [MWh/t] | Reinheit [Masse-% Si] |
|---|---|---|---|---|
| 11 | K | 0,1 | 12,81 | 98,8 |
| 12 | L | 0,1 | 12,81 | 98,8 |
| 13 | M | 0,1 | 12,77 | 98,8 |
| 14 | N | 0,1 | 12,8 | 98,9 |
| 15 | O | 0,1 | 12,75 | 99,0 |
| 16 | P | 0,1 | 12,74 | 99,1 |
| 17 | Q | 0,1 | 12,72 | 99,0 |
| 18 | R | 0,1 | 12,63 | 99,1 |
| 19 | S | 0,1 | 12,65 | 98,9 |
| 20 | T | 0,1 | 12,82 | 98,7 |
| 21 | U | 0,1 | 12,85 | 98,6 |
| 22 | R | 0,01 | 12,94 | 98,6 |
| 23 | R | 0,5 | 12,32 | 99,5 |
| 24 | R | 0,25 | 12,44 | 99,2 |
| 25 | R | 0,02 | 12,93 | 98,7 |
| 26 | R | 0,15 | 12,57 | 99,2 |
| 27 | R | 0,03 | 12,92 | 98,8 |
| 28 | R | 0,04 | 12,90 | 98,9 |

Die Beispiele belegen, dass die erfindungsgemäße Verwendung von Mediatoren bei der Herstellung von metallurgischem Silicium wirtschaftlich von Vorteil ist.

**Patentansprüche**

1.   Verfahren zur oxidativen Raffination von Rohsilicium-Schmelze bei der Herstellung von technischem Silicium, bei dem der Rohsilicium-Schmelze während der Raffination ein partikulärer Mediator zugesetzt wird, welcher einen Mindestgehalt an metallischem Silicium von 8 Masse-% sowie zumindest eines oder mehrere der Elemente H, C, O, F, Cl, Ca, Fe und Al enthält,

wobei der Mediator durch eine Kennzahl K beschrieben ist, die einen Wert von 0,03 bis 6 mm⁻¹ aufweist und wie folgt berechnet wird:

$$K = \frac{6 \cdot (1 - \varepsilon_{m,M})}{d_{50,M}},$$   (Gleichung 1),

wobei

$d_{50,M}$ Partikelgröße (Durchmesser) bei 50% des Massendurchgangs der Sieblinie des Mediators [mm]
$\varepsilon_{m,M}$ mittlere, effektive Porosität des partikulären Mediators.

**2.** Verfahren nach Anspruch 1, bei dem das technische Silicium ein Si-Gehalt von mindestens 95 Masse-% aufweist.

**3.** Verfahren nach einem oder mehreren der voranstehenden Ansprüche, bei dem der Mediator Siliciumreste enthält, die ausgewählt werden aus Nebenprodukten oder Abfällen, die bei der Herstellung oder bei der mechanischen Bearbeitung von Silicium anfallen.

**4.** Verfahren nach einem oder mehreren der voranstehenden Ansprüche, bei dem der Gewichtsanteil von reaktivem Kohlenstoff am Mediator, bezogen auf die Gesamtmasse des Mediators, höchstens 0,1 beträgt, wobei "reaktiver Kohlenstoff" der Kohlenstoffanteil des Mediators ist, der bis zu einer Temperatur von 1100 °C unter thermo-oxidativer Degradation mit $O_2$ reagiert.

**5.** Verfahren nach einem oder mehreren der voranstehenden Ansprüche, bei dem der Mediator einen Wasser-Gehalt von maximal 5 Masse-% aufweist.

**6.** Verfahren nach einem oder mehreren der voranstehenden Ansprüche, bei dem der Mediator einen Sauerstoffgewichtsanteil von maximal 0,4 Masse-% aufweist.

**7.** Verfahren nach einem oder mehreren der voranstehenden Ansprüche, bei dem das Masseverhältnis von Masse (Mediator) zu Masse (Rohsilicium-Schmelze) beim Zusetzen des Mediators 0,01 bis 0,5 beträgt.

**Claims**

**1.** Process for oxidatively refining crude molten silicon in the production of technical silicon, wherein the crude molten silicon is admixed during refining with a particulate mediator which comprises a minimum amount of metallic silicon of 8% by mass and also at least one or more of the elements H, C, O, F, Cl, Ca, Fe and Al,

the mediator being described by a characteristic number K which has a value of 0.03 to 6 mm$^{-1}$ and is calculated as follows:

$$K = \frac{6 \cdot (1 - \varepsilon_{m,M})}{d_{50,M}}, \qquad \text{(equation 1),}$$

where

$d_{50,M}$ is the particle size (diameter) at 50% of the mass undersize of the grading curve of the mediator [mm]
$\varepsilon_{m,M}$ is the mean, effective porosity of the particulate mediator.

**2.** Process according to Claim 1, wherein the technical silicon has an Si content of at least 95% by mass.

**3.** Process according to one or more of the preceding claims, wherein the mediator comprises silicon residues selected from by-products or wastes which are obtained in the production or in the mechanical working of silicon.

**4.** Process according to one or more of the preceding claims, wherein the weight fraction of reactive carbon in the mediator, based on the total mass of the mediator, is at most 0.1, with "reactive carbon" being that carbon fraction of the mediator that reacts with $O_2$ up to a temperature of 1100°C with thermooxidative degradation.

**5.** Process according to one or more of the preceding claims, wherein the mediator has a water content of not more than 5% by mass.

**6.** Process according to one or more of the preceding claims, wherein the mediator has an oxygen weight fraction of not more than 0.4% by mass.

**7.** Process according to one or more of the preceding claims, wherein the mass ratio of mass (mediator) to mass (crude molten silicon) on addition of the mediator is 0.01 to 0.5.

## Revendications

1. Procédé pour le raffinage par oxydation d'une masse fondue de silicium brut lors de la préparation de silicium de qualité technique, dans lequel la masse fondue de silicium brut est additionnée pendant le raffinage d'un médiateur particulaire, qui contient une teneur minimale en silicium métallique de 8 % en masse ainsi qu'au moins un ou plusieurs des éléments H, C, O, F, Cl, Ca, Fe et Al,

   le médiateur étant décrit par un indicateur K qui présente une valeur de 0,03 à 6 mm$^{-1}$ et qui est calculé comme suit :

$$K = \frac{6 \cdot (1 - \varepsilon_{m,M})}{d_{50,M}},$$

   (équation 1),

   dans laquelle

   $d_{50,M}$ représente la grosseur de particule (diamètre) à 50 % du passage de la masse de la courbe granulométrique du médiateur [mm]
   $\varepsilon_{m,M}$ représente la porosité moyenne effective du médiateur particulaire.

2. Procédé selon la revendication 1, dans lequel le silicium de qualité technique présente une teneur en Si d'au moins 95 % en masse.

3. Procédé selon l'une ou plusieurs des revendications précédentes, dans lequel le médiateur contient des restes de silicium qui sont choisis parmi les produits secondaires ou les déchets qui sont produits lors de la préparation ou lors du traitement mécanique de silicium.

4. Procédé selon l'une ou plusieurs des revendications précédentes, dans lequel la proportion en poids de carbone réactif du médiateur, par rapport à la masse totale du médiateur, est d'au plus 0,1, le "carbone réactif" étant la proportion de carbone du médiateur qui réagit avec $O_2$ jusqu'à une température de 1 100 °C avec une dégradation thermo-oxydante.

5. Procédé selon l'une ou plusieurs des revendications précédentes, dans lequel le médiateur présente une teneur en eau d'au maximum 5 % en masse.

6. Procédé selon l'une ou plusieurs des revendications précédentes, dans lequel le médiateur présente une proportion en poids d'oxygène d'au maximum 0,4 % en masse.

7. Procédé selon l'une ou plusieurs des revendications précédentes, dans lequel le rapport massique de la masse (médiateur) à la masse (masse fondue de silicium brut) lors de l'ajout du médiateur vaut 0,01 à 0,5.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2321220 B1
- WO 2010098676 A1
- CN 103318894 A

**In der Beschreibung aufgeführte Nicht-Patentliteratur**

- Production of High Silicon Alloys. **A. SCHEI ; J.K. TUSET ; H. TVEIT.** Production of High Silicon Alloys. Tapir forlag, 1998